# EUROPEAN PATENT SPECIFICATION

(11) **EP 3 786 572 B1**
(45) Date of publication and mention of the grant of the patent: **29.03.2023**
(21) Application number: 20178192.9
(22) Date of filing: 04.06.2020
(51) Int. Cl.: G01B 3/00, G01D 7/00, G01B 5/004, G01B 5/06, G01B 5/12, G01B 5/14, G01D 13/20

(54) **ONE-DIMENSIONAL MEASURING MACHINE WITH MEANS FOR INDICATING A CHOSEN ORIGIN**
EINDIMENSIONALE MESSMASCHINE MIT MITTELN ZUR ANGABE EINES GEWÄHLTEN NULLPUNKTES
MACHINE DE MESURE UNIDIMENSIONNELLE COMPRENANT DES MOYENS POUR INDIQUER UNE ORIGINE CHOISIE

(30) Priority: 29.08.2019 JP 2019156703
(43) Date of publication of application: 03.03.2021
(73) Proprietor: Mitutoyo Corporation, Kawasaki-shi, Kanagawa 213-8533 (JP)
(72) Inventor: YANO, Ryunosuke, Miyazaki, Miyazaki 889-1701 (JP)
(74) Representative: Gill Jennings & Every LLP

(56) References cited:
- EP-A2- 1 022 538
- CN-A- 106 546 152
- GB-A- 1 482 121
- JP-A- 2016 085 054
- US-A1- 2004 054 502
- US-A1- 2005 005 468
- US-A1- 2018 023 945

## Description

The present invention relates to a one-dimensional measuring machine.

There has been a conventionally known one-dimensional measuring machine that measures various dimensions (for example, a height, a step, and a hole diameter) of an object to be measured in one direction. For example, the one-dimensional measuring machine disclosed in JP 2002-221414 A (Patent Document 1) includes a probe configured to contact an object to be measured in a vertical direction, a movement mechanism that supports the probe to be displaceable in the vertical direction, and a detector that detects an amount of displacement of the probe in the vertical direction. Various dimensions of the object to be measured are measured based on the amount of displacement of the probe detected by the detector.

The one-dimensional measuring machine described above can set two types of origins, an "absolute origin" and a "relative origin," to a measurement range in which the probe is permitted to be disposed. The "absolute origin" is set, for example, on a surface plate as a reference for the detector to detect the amount of displacement of the probe. On the other hand, the "relative origin" is set to any relative position to the absolute origin, and, for example, is set on a reference part of the object to be measured. The one-dimensional measuring machine takes an origin selected by a user as a used origin and measures a distance between the used origin and a current position of the probe, thus ensuring easily measuring various dimensions in the same workpiece.

To inspect various dimensions of a product using the one-dimensional measuring machine described above, the user needs to know which dimension of the product is measured, that is, where the used origin is located in the measurement range. In particular, to improve work efficiency of dimensional inspection, it is desirable that the user can intuitively grasp the used origin.

However, there are no means to intuitively grasp the used origin in the related art. Assuming that a display displays, for example, a value indicative of a name of the used origin or a position of the used origin, it is difficult for the user to intuitively grasp the used origin. Therefore, an ability and effort to grasp the used origin from the information displayed on the display are required.

An object of the invention is to provide a one-dimensional measuring machine that allows a user to intuitively grasp a used origin. US 2018/023945 A1 discloses a height gauge with a single vertical measure and displacement axis. US 2004/054502 A1 discloses a method and apparatus for supporting the measurement of an object to be measured. GB 1 482 121 A discloses a solid state meter for providing measurement of an electrical input by means of a pointer co-operating with a scale. EP 1 022 538 A2 discloses a height gauge with air floatation handle. US 2005/005468 A1 discloses a system for providing accurately calibrated digital measurements in woodworking machines and other types of machinery tools and applications. JP 2016 085054 A discloses a contact-type coordinate measurement apparatus.

A one-dimensional measuring machine according to an aspect of the invention includes a probe, a movement mechanism, a detector, a measurement unit, a display unit, and a display control unit. The probe is configured to contact an object to be measured in one direction. The movement mechanism movably supports the probe in the one direction. The detector is configured to detect a current position of the probe in the one direction. The measurement unit is configured to take a selected origin as a used origin among a plurality of the origins including an absolute origin and a relative origin set in a measurement range in the one direction in which the probe is permitted to be disposed. The measurement unit is configured to measure a distance between the used origin and the current position of the probe detected by the detector. The display unit includes a display screen. The display control unit is configured to display a scale bar indicative of the measurement range on the display screen. The display control unit is configured to display an origin mark at a position corresponding to the used origin on the scale bar, wherein the origin mark is configured to enable a user to identify the used origin on the scale bar.

According to the invention, a position of the used origin to the measurement range is displayed as a position of the origin mark on the scale bar. This reduces an ability and effort required to grasp the used origin from information displayed on the display unit and allows a user to intuitively grasp the used origin.

The one-dimensional measuring machine of the invention is preferably configured as follows. The display control unit is configured to display the origin marks of the plurality of origins including the used origin to which pieces of identification information of the origins are added at positions corresponding to the origins on the scale bar.

According to the invention, the positions of the respective origins to the measurement range are displayed as the positions of the respective origin marks on the scale bar. Thus, the user can intuitively grasp a positional relationship between the plurality of origins set to the measurement range.

The origin marks displayed on the scale bar allow identification of the origins corresponding to the origin marks with the pieces of identification information (for example, a number and a color) added to the origin marks. Thus, the user can identify which origin mark corresponds to the used origin. Thus, the confirmation of the origin mark displayed on the scale bar allows the user to intuitively grasp the position of the used origin in the measurement range.

The one-dimensional measuring machine of the invention is preferably configured as follows. The display control unit is configured to display a probe mark at a position corresponding to the current position of the probe on the scale bar.

According to the invention, the user can intuitively grasp a positional relationship between the used origin and the probe.

The one-dimensional measuring machine of the invention is preferably configured as follows. The display control unit is configured to switch a color of the probe mark between a case where the absolute origin is selected as the used origin and a case where the relative origin is selected as the used origin.

According to the invention, the confirmation of the color of the probe mark allows the user to intuitively grasp whether the current used origin is the absolute origin or the relative origin.

The one-dimensional measuring machine of the invention is preferably configured as follows. The display control unit is configured such that when the relative origin is selected as the used origin, the display control unit adds a piece of identification information of the relative origin to the probe mark and display the probe mark with the piece of identification information.

According to the invention, the confirmation of the probe mark allows the user to grasp which relative origin is the used origin simultaneously with grasping the current used origin being the relative origin.

A one-dimensional measuring machine according to another aspect of the invention includes a probe, a movement mechanism, a detector, a measurement unit, a plurality of first lighting units, and a lighting control unit. The probe is configured to contact an object to be measured in one direction. The movement mechanism movably supports the probe in the one direction. The detector is configured to detect a current position of the probe in the one direction. The measurement unit is configured to take a selected origin as a used origin among a plurality of the origins including an absolute origin and a relative origin set in a measurement range in the one direction in which the probe is permitted to be disposed. The measurement unit is configured to measure a distance between the used origin and the current position of the probe detected by the detector. The plurality of first lighting units constitute a scale bar representing the measurement range. The lighting control unit is configured to cause the first lighting unit disposed at a position corresponding to the used origin on the scale bar to turn on.

According to the invention, a position of the used origin in the measurement range is displayed as a position of the first lighting unit in a turned-on state in the scale bar constituted by the plurality of first lighting units. This allows the user to intuitively grasp the position of the used origin in the measurement range by confirming the turned-on states of the plurality of first lighting units.

The one-dimensional measuring machine of the invention is preferably configured as follows. The lighting control unit is configured to cause the first lighting units to turn on in different colors between a case where the absolute origin is selected as the used origin and a case where the relative origin is selected as the used origin.

According to the invention, the user can intuitively grasp whether the current used origin is the absolute origin or the relative origin by confirming the lighting color of the first lighting unit.

The one-dimensional measuring machine of the invention is preferably configured as follows. The movement mechanism includes a slider and a guide. The slider holds the probe. The guide guides the slider in the one direction. The plurality of first lighting units are provided along the one direction to the guide.

According to the invention, even a third party at a position away from the one-dimensional measuring machine can intuitively grasp the used origin. This makes it easier for the third party to confirm a user's measurement work.

The one-dimensional measuring machine of the invention is preferably configured as follows. The one-dimensional measuring machine further includes a second lighting unit provided on the slider. The lighting control unit is configured to cause the second lighting unit to turn on in different colors between a case where the absolute origin is selected as the used origin and a case where the relative origin is selected as the used origin.

According to the invention, when the user gazes steadily around the probe, the slider holding the probe relatively easily enters the user's field of vision, and therefore the user easily confirms the second lighting unit provided on the slider. Thus, even while the user gazes steadily around the probe, the user can intuitively grasp whether the current used origin is the absolute origin or the relative origin by confirming the lighting color of the second lighting unit.

### Brief Description of Drawings

FIG. 1 is a perspective view illustrating a height gauge according to a first embodiment of the invention.
FIG. 2 is a block diagram illustrating a control unit of the first embodiment.
FIG. 3 is a diagram describing settings of an absolute origin and relative origins.
FIG. 4 is a diagram illustrating an example of a setting screen displayed on a display unit of the first embodiment.
FIG. 5 is a diagram illustrating an example of a measurement screen displayed on the display unit of the first embodiment.
FIG. 6 is a diagram illustrating another example of the measurement screen displayed on the display unit of the first embodiment.
FIG. 7 is a diagram illustrating an origin display area of the measurement screen of the first embodiment.
FIG. 8 is a perspective view illustrating a height gauge according to a second embodiment of the invention.
FIG. 9 is a block diagram illustrating a control unit of the second embodiment.

### First Embodiment

A first embodiment of the invention will be described hereinafter on the basis of the drawings.

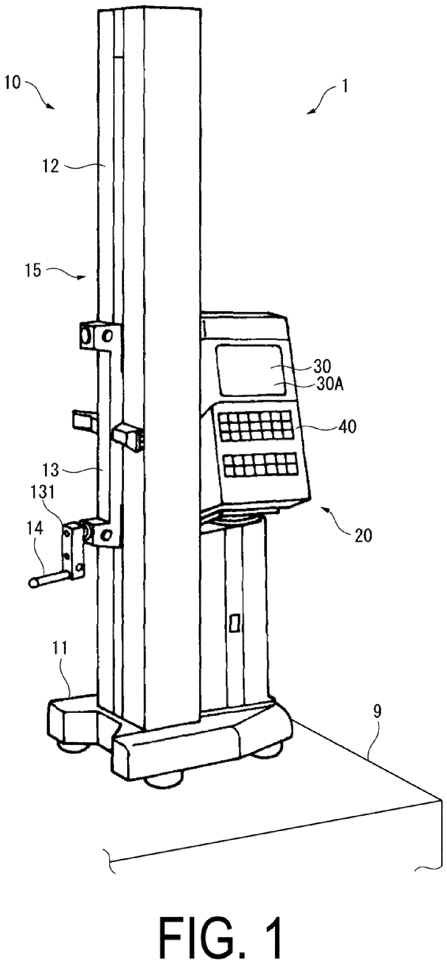

As illustrated in FIG. 1, a height gauge 1 of the present embodiment measures dimensions (for example, a height, a step, and a hole diameter) of an object to be measured in a vertical direction. The height gauge 1 includes a measuring machine body 10, a control unit 20 that controls the measuring machine body 10, a display unit 30, and an operation unit 40.

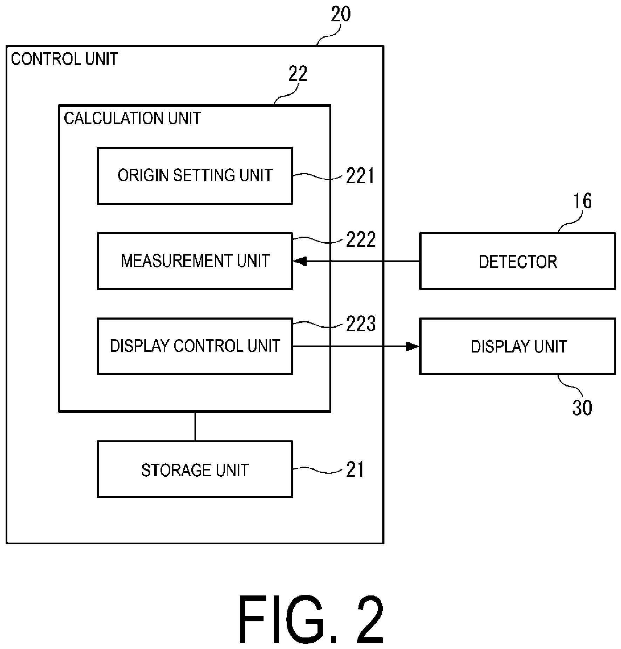

The measuring machine body 10 of the present embodiment has a configuration substantially similar to that of the conventional one. Specifically, the measuring machine body 10 includes a base 11 placed on a surface plate 9, a movement mechanism 15 provided on the base 11, a probe 14 movably supported in the vertical direction by the movement mechanism 15, and a detector 16 (see FIG. 2) that detects a position of the probe 14 in the vertical direction.

The movement mechanism 15 includes a guide 12 provided on the base 11 in a state disposed along the vertical direction, and a slider 13 guided in the vertical direction by the guide 12. The slider 13 includes a holder 131 that holds the probe 14. The probe 14 moves vertically with the slider 13.

Furthermore, although not illustrated, the movement mechanism 15 may include driving means, such as a handle or a motor, and transmission means, such as a belt for transmitting a driving force of the driving means to the slider 13.

Although not illustrated, the detector 16 includes a scale provided along the vertical direction on the guide 12 and a detection head provided on the slider 13 so as to be opposed to the scale. The detector 16 detects a current position of the probe 14 based on a position of the detection head to the scale.

The detector 16 of the present embodiment detects the current position of the probe 14 to an absolute origin (a distance of the probe 14 from the absolute origin) and outputs it to the control unit 20.

The display unit 30 is, for example, a liquid crystal display and includes a display screen 30A that displays various kinds of information. Note that the display unit 30 may be configured as a touch display to have some functions of the operation unit 40.

The operation unit 40 is, for example, a keyboard and accepts input operations by a user.

The control unit 20 outputs a measurement command to the measuring machine body 10, and calculates a measurement value based on a detection signal input from the measuring machine body 10. Specifically, as illustrated in FIG. 2, the control unit 20 includes a storage unit 21 including, for example, a memory and a calculation unit 22 including, for example, a Central Processing Unit (CPU). The calculation unit 22 reads and executes a program stored in the storage unit 21 to function as an origin setting unit 221, a measurement unit 222, and a display control unit 223.

The origin setting unit 221 sets a plurality of origins (the absolute origin and relative origins described later) and causes the storage unit 21 to store them. The origin setting unit 221 sets an origin selected from the plurality of origins as a used origin.

The measurement unit 222 measures a distance between the current position of the probe 14 detected by the detector 16 and the used origin.

The display control unit 223 controls a display of various kinds of information on the display screen 30A of the display unit 30. Details of the display control unit 223 will be described later.

### Setting of Origin

In the present embodiment, the plurality of origins including the "absolute origin (hereinafter, an ABS origin)" and the "relative origins (hereinafter, INC origins)" can be set to a measurement range in the vertical direction in which the probe 14 is permitted to be disposed. The ABS origin is set, for example, on a top surface of the surface plate 9 as a reference for the detector 16 to detect the current position of the probe 14. On the other hand, the INC origin is set to one or more any relative positions to the absolute origin, and is set, for example, on a reference part of the object to be measured.

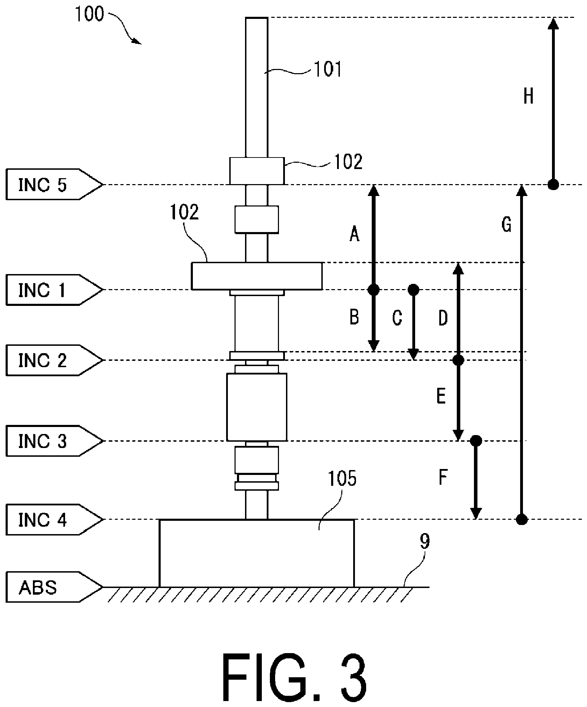

FIG. 3 is a diagram illustrating a vehicle shaft 100 as an example of the object to be measured. The vehicle shaft 100 illustrated in FIG. 3 as an example includes a shaft 101 and a plurality of gears 102 provided on the shaft 101. Note that in FIG. 3, the vehicle shaft 100 is fixed to a fixing jig 105 with the shaft 101 disposed along the vertical direction.

When the vehicle shaft 100 illustrated in FIG. 3 as an example is the object to be measured, the ABS origin and the plurality of INC origins can be set as follows.

First, the user inputs an instruction to set the ABS origin to the operation unit 40 and moves the probe 14 in the vertical direction to bring the probe 14 into contact with the top surface of the surface plate 9. The origin setting unit 221 causes the storage unit 21 to store the position of the probe 14 when the probe 14 contacts the surface plate 9 as the ABS origin.

Next, the user inputs an instruction to set the INC origins to the operation unit 40 and causes the probe 14 to move in the vertical direction to bring the probe 14 into contact with an end surface of the desired gear 102. The origin setting unit 221 causes the storage unit 21 to store the position of the probe 14 (the relative position to the ABS origin: distance from the ABS origin) when the probe 14 contacts the end surface of the gear 102 as the INC origin.

The above-described setting operation of the INC origin is repeatedly performed by the number of set INC origins.

Note that in the present embodiment, when the plurality of INC origins are set, a piece of identification information of each INC origin is associated with position information and is stored in the storage unit 21. In the present embodiment, for convenience, a number assigned for each INC origin is treated as the piece of identification information of the INC origin.

In the present embodiment, "INC + number" is a name of the INC origin, and "ABS" is a name of the ABS origin.

Any given one origin among the plurality of origins set to the measurement range as described above is selected as the used origin. For example, in the initial state, an absolute origin is selected as the used origin, and the user operates the operation unit 40 to switch the origin selected as the used origin. The origin setting unit 221 sets the origin thus selected as the used origin, and the measurement unit 222 measures the distance between the current position of the probe 14 and the used origin.

Note that in a case where the ABS origin is selected as the used origin, the measurement unit 222 outputs the current position (the distance from the ABS origin) of the probe 14 detected by the detector 16 as a measurement value. On the other hand, in a case where the INC origin is selected as the used origin, the distance from the INC origin to the current position of the probe 14 is calculated based on the current position (the distance from the ABS origin) of the probe 14 detected by the detector 16, and the calculated value is output as the measurement value.

Here, in the vehicle shaft 100 illustrated in FIG. 3 as an example, five INC origins (INC1 to INC5) are set to the measurement range. To inspect dimensions of the vehicle shaft 100, for example, respective dimensions of ranges A, B, C can be measured using INC1 as the used origin, respective dimensions of ranges D, E can be measured using INC2 as the used origin, a dimension of a range F can be measured using INC3 as the used origin, a dimension of a range G can be measured using INC4 as the used origin, and a dimension of a range H can be measured using INC5 as the used origin.

### Display Control Unit

Next, an operation of the display control unit 223 of the present embodiment will be described. Note that the following will describe the case where the ABS origin (ABS) and the five INC origins (INC1 to INC5) are set as an example.

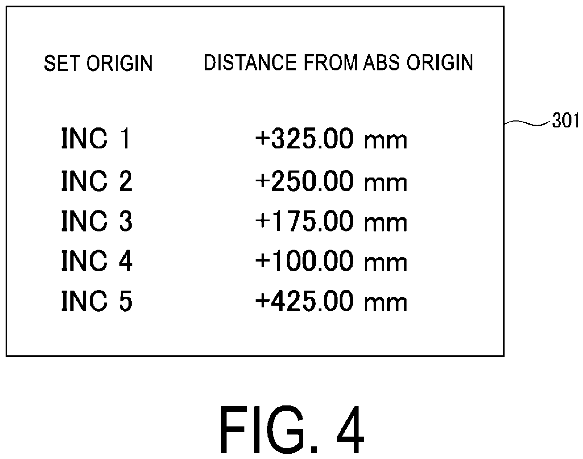

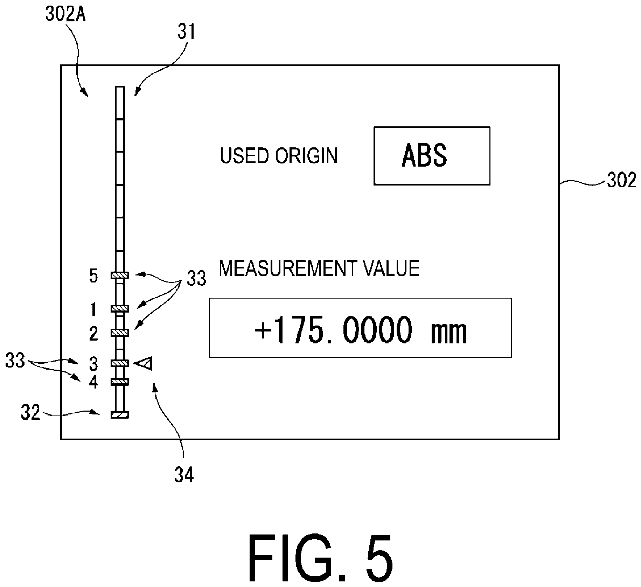

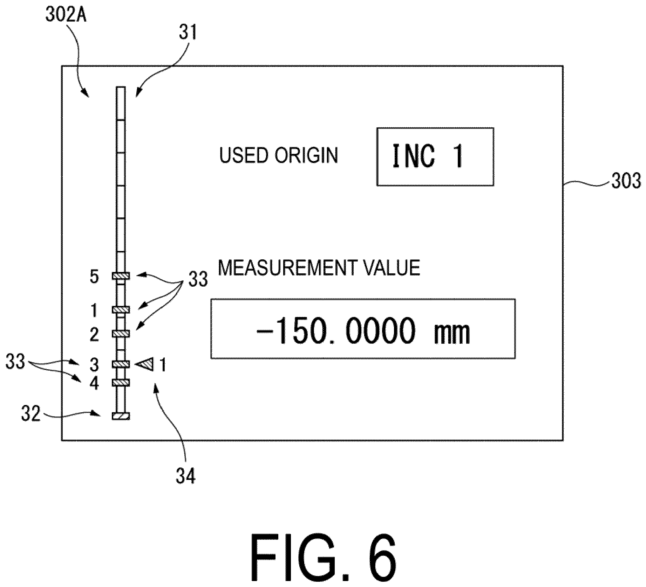

In the present embodiment, the display control unit 223 can switch the screen between a setting screen 301 (see FIG. 4) and a measurement screen 302, 303 (see FIG. 5 or FIG. 6) on the display screen 30A of the display unit 30 according to the operation by the user and display it.

The setting screen 301 illustrated in FIG. 4 displays information of the currently set INC origins. In other words, the setting screen 301 displays the names (INC1 to INC5) of the currently set INC origins and the position information (the distance from the ABS origin) of each INC origin. Confirmation of the setting screen 301 allows the user to confirm the information of the currently set INC origins.

The measurement screens 302, 303 illustrated in FIG. 5 and FIG. 6 display the name of the current used origin (ABS in FIG. 5, and INC1 in FIG. 6), the measurement value using the used origin as the reference, and an origin display area 302A described later.

Here, the measurement screen 302 illustrated in FIG. 5 is displayed when the ABS origin is selected as the used origin. On the other hand, the measurement screen 303 illustrated in FIG. 6 is displayed when the INC origin is selected as the used origin.

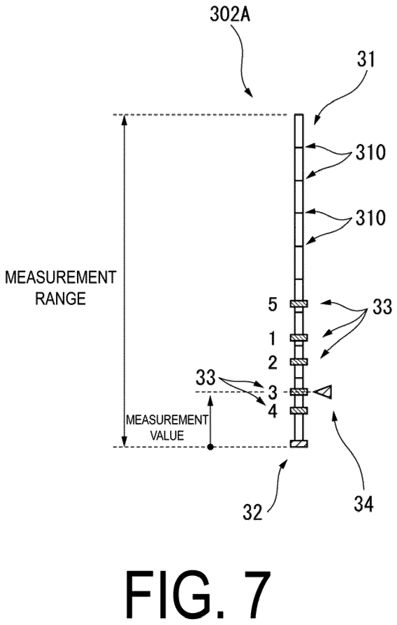

FIG. 7 is a diagram illustrating the origin display area 302A illustrated in FIG. 5. As illustrated in FIG. 7, the origin display area 302A displays a scale bar 31, origin marks 32, 33, and a probe mark 34.

The scale bar 31 indicates the measurement range in which the probe 14 is permitted to be disposed, and has scales 310 at every predetermined interval. For example, in FIG. 7, the total length of the scale bar 31 corresponds to the measurement range of 1000 mm, and the scales 310 correspond to 100-mm-units of the measurement range.

The origin marks 32, 33 are superimposed to be displayed on the scale bar 31.

The origin mark 32 is a mark indicating the ABS origin having, for example, a red bar shape. The origin mark 32 is disposed at a position corresponding to the ABS origin on the scale bar 31, a lower end portion of the scale bar 31 in the present embodiment. Note that in the present embodiment, the color (red) added to the origin mark 32 is equivalent to the piece of identification information of the ABS origin.

The origin mark 33 is a mark indicating the INC origin having, for example, a green bar shape. The origin mark 33 is disposed at a position corresponding to each INC origin (INC1 to INC5) on the scale bar 31.

The number of each INC origin (INC1 to INC5) is displayed in the vicinity of the origin mark 33. Note that in the present embodiment, the color (green) and the number added to the origin mark 33 are equivalent to the piece of identification information of the INC origin.

For example, in FIG. 5 and FIG. 6, since the distance between INC1 and the ABS origin is +325.00 mm (see FIG. 4), the origin mark 33 indicating INC1 is disposed at a position away from the lower end portion of the scale bar 31 by three and a quarter scales, and the number "1" is displayed in the vicinity.

In addition, since the distance between INC2 and the ABS origin is + 250.00 mm (see FIG. 4), the origin mark 33 indicating INC2 is disposed at a position away from the lower end portion of the scale bar 31 by two and a half scales, and the number "2" is displayed in the vicinity.

The probe mark 34 is a mark indicating the probe 14 having, for example, a triangular shape. The probe mark 34 is disposed at a position corresponding to the current position of the probe 14 on the scale bar 31.

With the ABS origin selected as the used origin, the probe mark 34 is displayed in red in the same manner as the origin mark 32 (see FIG. 5 and FIG. 7). On the other hand, with the INC origin selected as the used origin, the probe mark 34 is displayed in green in the same manner as the origin mark 33 (see FIG. 6).

With the INC origin selected as the used origin, the number included in the name of the INC origin selected as the used origin is displayed in the vicinity of the probe mark 34. For example, in the example illustrated in FIG. 6, INC1 is selected as the used origin, and "1" is displayed in the vicinity of the probe mark 34.

### Effects of First Embodiment

The height gauge 1 of the present embodiment includes the measuring machine body 10, the display unit 30, and the control unit 20. The control unit 20 functions as the measurement unit 222 and the display control unit 223. The measurement unit 222 measures the distance between the used origin selected from the plurality of origins (ABS origin, INC origins) and the current position of the probe 14 detected by the detector 16. The display control unit 223 causes the display unit 30 to display the scale bar 31 indicative of the measurement range on the display screen 30A. The display control unit 223 is configured to display the origin marks 32, 33 of the plurality of origins (ABS origin, INC origins) including the used origin to which the pieces of identification information of the origins are added at the positions corresponding to the respective origins on the scale bar 31.

According to the present embodiment, the positions of the respective origins to the measurement range are displayed as the positions of the respective origin marks 32, 33 on the scale bar 31. Thus, the user can intuitively grasp the positional relationship between the plurality of origins set to the measurement range.

The origin marks 32, 33 allow the identification of the origins corresponding to the origin marks 32, 33 with the pieces of identification information (for example, the number and the color) added to the origin marks 32, 33. Thus, the user can identify which origin mark 32, 33 corresponds to the used origin. Thus, the confirmation of the origin mark 32, 33 displayed on the scale bar 31 allows the user to intuitively grasp the position of the used origin in the measurement range.

Additionally, in the present embodiment, the display unit 30 displays the measurement value measured by the measurement unit 222 along with the scale bar 31 and the origin marks 32, 33. Thus, the user can also grasp the used origin serving as the reference of the measurement value by the operation of confirmation of the measurement value.

In the height gauge 1 of the present embodiment, the display control unit 223 displays the probe mark 34 at the position corresponding to the probe 14 on the scale bar 31.

According to the present embodiment, the user can intuitively grasp the positional relationship between the used origin and the probe 14.

In the height gauge 1 of the present embodiment, the display control unit 223 is configured to switch the color of the probe mark 34 between the case where the ABS origin is selected as the used origin and the case where the INC origin is selected as the used origin.

According to the present embodiment, the confirmation of the color of the probe mark 34 allows the user to intuitively grasp whether the current used origin is the ABS origin or the INC origin.

In particular, in the present embodiment, when the ABS origin is selected as the used origin, the probe mark 34 is displayed in red in the same manner as the origin mark 32, and when the INC origin is selected as the used origin, the probe mark 34 is displayed in green in the same manner as the origin mark 33. Thus, the user can more intuitively grasp whether the current used origin is the ABS origin or the INC origin.

In the height gauge 1 of the present embodiment, when the INC origin is selected as the used origin, the display control unit 223 displays the probe mark 34 to which the piece of identification information (number) of the INC origin is added.

According to the present embodiment as, the confirmation of the probe mark 34 allows the user to grasp which INC origin is the used origin simultaneously with grasping the current used origin being the INC origin.

### Second Embodiment

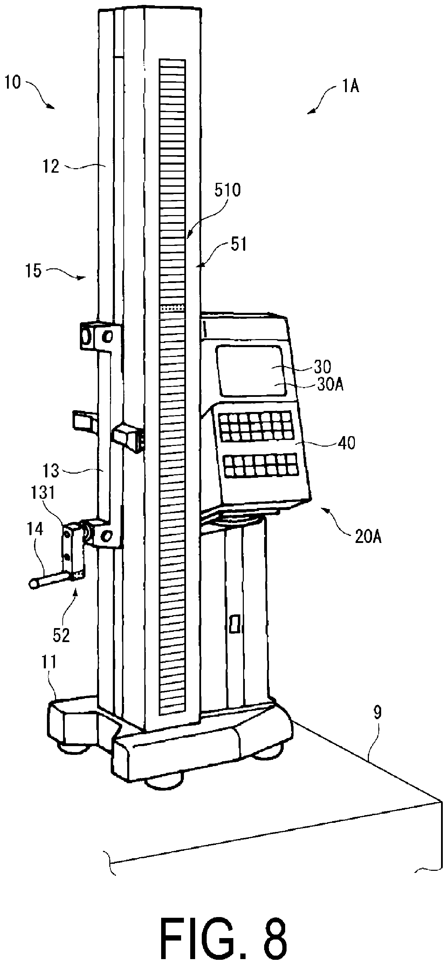

In the height gauge 1 of the first embodiment described above, the display unit 30 and the display control unit 223 constitute means to represent the used origin set to the measurement range. In contrast, in a height gauge 1A of the second embodiment illustrated in FIG. 8, a plurality of first lighting units 51, a second lighting unit 52, and a lighting control unit 224 constitute means to represent the used origin set to the measurement range.

Hereinafter, there may be a case where a configuration different from that of the first embodiment will be described, the same reference sign as in the first embodiment will be given to a configuration similar to that of the first embodiment, and descriptions thereof will be omitted.

The plurality of first lighting units 51 are provided aligned along the vertical direction on the side surface of the guide 12 to constitute a scale bar 510 indicative of the measurement range.

For example, in a case where 20 pieces of the first lighting units 51 are provided on the side surface of the guide 12, the scale bar 510 constituted by 20 pieces of the first lighting units 51 indicates the measurement range of 1000 mm, and one first lighting unit 51 corresponds to a 50-mm-unit of the measurement range.

The first lighting unit 51 is constituted by, for example, an LED. Of the plurality of first lighting units 51, the first lighting unit 51 disposed at the bottom corresponds to the ABS origin and can emit red light. Of the plurality of first lighting units 51, the first lighting units 51 disposed at positions other than the bottom can emit green light.

The second lighting unit 52 is provided on the holder 131 of the slider 13. The second lighting unit 52 is constituted by, for example, an LED, and can switch light between the red light and the green light and emit it.

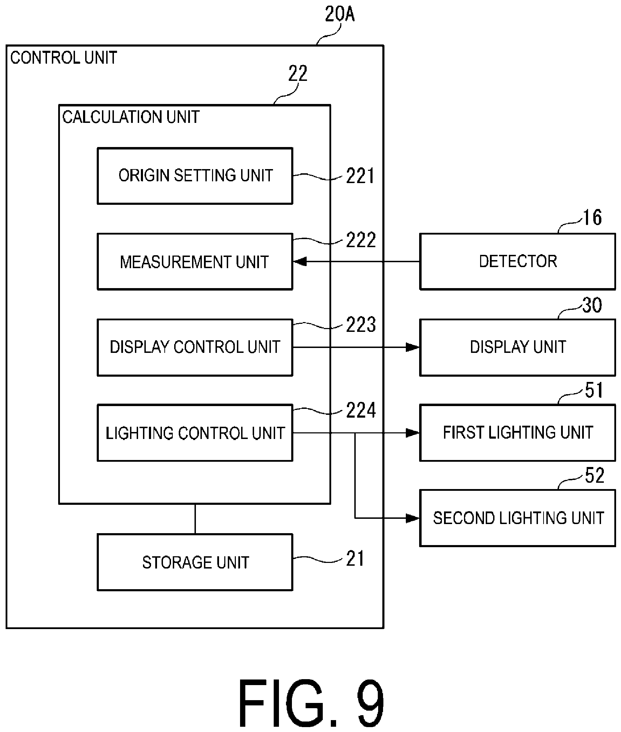

FIG. 9 is a block diagram illustrating a control unit 20A of the second embodiment. As illustrated in FIG. 9, the control unit 20A includes the storage unit 21 including, for example, a memory and the calculation unit 22 including, for example, a Central Processing Unit (CPU). The calculation unit 22 reads and executes a program stored in the storage unit 21 to function as the origin setting unit 221, the measurement unit 222, the display control unit 223, and the lighting control unit 224.

Note that the display control unit 223 may function similarly to the first embodiment, or needs not to display the origin display area 302A (see FIG. 5 or FIG. 6) in the measurement screen 302, 303 unlike the first embodiment.

The lighting control unit 224 causes the first lighting unit 51 disposed at the position corresponding to the used origin in the plurality of first lighting units 51 (scale bar 510).

For example, when the ABS origin is selected as the used origin, the lighting control unit 224 causes the first lighting unit 51 disposed at the bottom of the scale bar 510 to turn on in red and causes the other first lighting units 51 to turn off the light.

When INC2 (the distance from the ABS origin is +250.00 mm) is selected as the used origin, the lighting control unit 224 causes the first lighting unit 51 located on the fifth from the lower side of the scale bar 510 to turn on in green through a calculation of 250.00 mm/1000 mm × 20 pieces = 5 pieces and causes the other first lighting units 51 to turn off the light.

Note that in a case where the calculation result is not an integer, for example, the result only needs to be rounded off to the closest whole number.

When the ABS origin is selected as the used origin, the lighting control unit 224 causes the second lighting unit 52 to turn on in red in the same manner as the first lighting unit 51. On the other hand, when the INC origin is selected as the used origin, the lighting control unit 224 causes the second lighting unit 52 to turn on in green in the same manner as the first lighting unit 51.

### Effects of Second Embodiment

According to the second embodiment, the position of the used origin in the measurement range is displayed as the position of the first lighting unit 51 in the turned-on state in the scale bar 510 constituted by the plurality of first lighting units 51. This allows the user to intuitively grasp the position of the used origin in the measurement range by confirming the turned-on states of the plurality of first lighting units 51.

In the second embodiment, the lighting control unit 224 is configured to cause the first lighting units 51 to turn on in the different colors between the case where the ABS origin is selected as the used origin and the case where the INC origin is selected as the used origin. According to the second embodiment, the user can intuitively grasp whether the current used origin is the ABS origin or the INC origin by confirming the lighting color of the first lighting unit 51.

In the second embodiment, the plurality of first lighting units 51 are provided along the vertical direction to the guide 12. According to the second embodiment, the used origin can be easily grasped even at a position away from the height gauge 1A. This makes it easier for a third party to confirm the user's measurement work.

The slider 13 of the second embodiment includes the second lighting unit 52. The lighting control unit 224 switches the lighting colors of the first lighting unit 51 and the second lighting unit 52 between the case where the ABS origin is selected as the used origin and the case where the INC origin is selected as the used origin.

According to the present embodiment, even while the user gazes steadily around the probe 14, the user can intuitively grasp whether the current used origin is the ABS origin or the INC origin.

### Modified Example

The invention is not limited to the foregoing embodiments, the scope of protection being solely defined by the claims.

In the first embodiment, the display control unit 223 can change the scale of the scale bar 31 according to the user operation. The scale bar 31 may indicate a part of the range of the measurement range.

The display control unit 223 needs not to display the origin marks 33 of all of the set INC origins, and displaying or not displaying the origin mark 33 of each INC origin is individually settable.

According to the modified example, even in the case of measurement of a small workpiece, the plurality of origin marks 32, 33 can be displayed without an overlap.

In the first embodiment, the display control unit 223 may display only the origin mark 32 (or the origin mark 33) indicative of the origin selected as the used origin on the scale bar 31.

In the second embodiment, the height gauge 1A may have a configuration in which the second lighting unit 52 is not provided and the plurality of first lighting units 51 are provided.

Furthermore, in the second embodiment, the plurality of first lighting units 51 are not limited to be installed on the guide 12, but may be provided on another member, such as a prop.

In the respective embodiments, the height gauges 1, 1A that measure the dimensions of the object to be measured in the vertical direction have been described as the one-dimensional measuring machine of the invention. However, the invention is not limited to these embodiments. In other words, the invention is also applicable to a one-dimensional measuring machine that measures dimensions of an object to be measured in one direction other than the vertical direction.

### Reference Signs List

1, 1A Height gauge
10 Measuring machine body
11 Base
12 Guide
13 Slider
131 Holder
14 Probe
15 Movement mechanism
16 Detector
20, 20A Control unit
21 Storage unit
22 Calculation unit
221 Origin setting unit
222 Measurement unit
223 Display control unit
224 Lighting control unit
30 Display unit
301 Setting screen
302, 303 Measurement screen
302A Origin display area
31 Scale bar
310 Scale
32, 33 Origin mark
34 Probe mark
40 Operation unit
51 First lighting unit
510 Scale bar
52 Second lighting unit
9 Surface plate
100 Vehicle shaft
101 Shaft
102 Gear
105 Fixing jig

## Claims

1. A one-dimensional measuring machine (1) comprising:
a probe (14) configured to contact an object to be measured in one direction;
a movement mechanism (15) that movably supports the probe (14) in the one direction;
a detector (16) configured to detect a current position of the probe (14) in the one direction;
a measurement unit (222) configured to take a selected origin as a used origin among a plurality of the origins including an absolute origin and a relative origin set in a measurement range in the one direction in which the probe (14) is permitted to be disposed, the measurement unit being configured to measure a distance between the used origin and the current position of the probe (14) detected by the detector (16);
a display unit (30) that includes a display screen (30A); and
a display control unit (223) configured to display a scale bar (31) indicative of the measurement range on the display screen (30A), the display control unit (223) being configured to display an origin mark (32, 33) at a position corresponding to the used origin on the scale bar (31);
wherein the origin mark (32, 33) is configured to enable a user to identify the used origin on the scale bar (31).

2. The one-dimensional measuring machine (1) according to claim 1, wherein
the display control unit (223) is configured to display the origin marks (32, 33) of the plurality of origins including the used origin to which pieces of identification information of the origins are added at positions corresponding to the origins on the scale bar (31).

3. The one-dimensional measuring machine (1) according to claim 1 or 2, wherein
the display control unit (223) is configured to display a probe mark (34) at a position corresponding to the current position of the probe (14) on the scale bar (31).

4. The one-dimensional measuring machine (1) according to claim 3, wherein
the display control unit (223) is configured to switch a color of the probe mark (34) between a case where the absolute origin is selected as the used origin and a case where the relative origin is selected as the used origin.

5. The one-dimensional measuring machine (1) according to claim 4,
wherein the display control unit (223) is configured such that when the relative origin is selected as the used origin, the display control unit (223) adds a piece of identification information of the relative origin to the probe mark (34) and display the probe mark (34) with the piece of identification information.

6. A one-dimensional measuring machine (1A) comprising:
a probe (14) configured to contact an object to be measured in one direction;
a movement mechanism (15) that movably supports the probe (14) in the one direction;
a detector (16) configured to detect a current position of the probe (14) in the one direction;
a measurement unit (222) configured to take a selected origin as a used origin among a plurality of the origins including an absolute origin and a relative origin set in a measurement range in the one direction in which the probe (14) is permitted to be disposed, the measurement unit (222) being configured to measure a distance between the used origin and the current position of the probe (14) detected by the detector (16);
a plurality of first lighting units (51) constituting a scale bar (510) representing the measurement range; and
a lighting control unit (224) configured to cause the first lighting unit (51) disposed at a position corresponding to the used origin on the scale bar (510) to turn on.

7. The one-dimensional measuring machine (1A) according to claim 6, wherein
the lighting control unit (224) is configured to cause the first lighting units (51) to turn on in different colors between a case where the absolute origin is selected as the used origin and a case where the relative origin is selected as the used origin.

8. The one-dimensional measuring machine (1A) according to claim 6 or 7, wherein
the movement mechanism (15) includes a slider (13) and a guide (12), the slider (13) holds the probe (14), and the guide (12) guides the slider (13) in the one direction, and
the plurality of first lighting units (51) are provided along the one direction to the guide (12).

9. The one-dimensional measuring machine (1A) according to claim 8, further comprising
a second lighting unit (52) provided on the slider (13), and
the lighting control unit (224) is configured to cause the second lighting unit (52) to turn on in different colors between a case where the absolute origin is selected as the used origin and a case where the relative origin is selected as the used origin.

## Patentansprüche

1. Eindimensionale Messmaschine (1), umfassend:
eine Sonde (14), die konfiguriert ist, um ein Objekt zu berühren, das in einer Richtung gemessen werden soll;
einen Bewegungsmechanismus (15), der die Sonde (14) in der einen Richtung beweglich stützt;
einen Detektor (16), der konfiguriert ist, um eine aktuelle Position der Sonde (14) in der einen Richtung zu erfassen;
eine Messeinheit (222), die konfiguriert ist, um einen ausgewählten Ursprung als einen verwendeten Ursprung unter einer Vielzahl der Ursprünge, einschließlich eines absoluten Ursprungs und eines relativen Ursprungs, die in einem Messbereich in der einen Richtung eingestellt sind, in der die Sonde (14) angeordnet werden darf, zu nehmen, wobei die Messeinheit konfiguriert ist, um einen Abstand zwischen dem verwendeten Ursprung und der aktuellen Position der Sonde (14), die durch den Detektor (16) erfasst wird, zu messen;
eine Anzeigeeinheit (30), die einen Anzeigebildschirm (30A) einschließt; und
eine Anzeigesteuereinheit (223), die konfiguriert ist, um eine Skalenleiste (31) anzuzeigen, die bezeichnend für den Messbereich auf dem Anzeigebildschirm (30A) ist, wobei die Anzeigesteuereinheit (223) konfiguriert ist, um eine Ursprungsmarkierung (32, 33) an einer Position anzuzeigen, die dem verwendeten Ursprung auf der Skalenleiste (31)entspricht;
wobei die Ursprungsmarkierung (32, 33) konfiguriert ist, um es einem Benutzer zu ermöglichen, den verwendeten Ursprung auf der Skalenleiste (31) zu identifizieren.

2. Eindimensionale Messmaschine (1), nach Anspruch 1, wobei
die Anzeigesteuereinheit (223) konfiguriert ist, um die Ursprungsmarkierungen (32, 33) der Vielzahl von Ursprüngen anzuzeigen, einschließlich des verwendeten Ursprungs, an den Identifikationsinformationenentitäten des Ursprungs an Positionen hinzugefügt werden, die den Ursprüngen auf der Skalenleiste (31) entsprechen.

3. Eindimensionale Messmaschine (1) nach Anspruch 1 oder 2, wobei
die Anzeigesteuereinheit (223) konfiguriert ist, um eine Sondenmarkierung (34) an einer Position anzuzeigen, die der aktuellen Position der Sonde (14) auf der Skalenleiste (31) entspricht.

4. Eindimensionale Messmaschine (1) nach Anspruch 3, wobei
die Anzeigesteuereinheit (223) konfiguriert ist, um eine Farbe der Sondenmarkierung (34) zwischen einem Fall umzuschalten, in dem der absolute Ursprung als der verwendete Ursprung ausgewählt wird, und einem Fall, in dem der relative Ursprung als der verwendete Ursprung ausgewählt wird.

5. Eindimensionale Messmaschine (1) nach Anspruch 4,
wobei die Anzeigesteuereinheit (223) derart konfiguriert ist, dass, wenn der relative Ursprung als der verwendete Ursprung ausgewählt wird, die Anzeigesteuereinheit (223) eine Identifizierungsinformationentität des relativen Ursprungs zu der Sondenmarkierung (34) hinzufügt und die Sondenmarkierung (34) mit der Identifizierungsinformationentität anzeigt.

6. Eindimensionale Messmaschine (1A), umfassend:
eine Sonde (14), die konfiguriert ist, um ein Objekt zu berühren, das in einer Richtung gemessen werden soll;
einen Bewegungsmechanismus (15), der die Sonde (14) in der einen Richtung beweglich stützt;
einen Detektor (16), der konfiguriert ist, um eine aktuelle Position der Sonde (14) in der einen Richtung zu erfassen;
eine Messeinheit (222), die konfiguriert ist, um einen ausgewählten Ursprung als einen verwendeten Ursprung unter einer Vielzahl der Ursprünge, einschließlich eines absoluten Ursprungs und eines relativen Ursprungs, die in einem Messbereich in der einen Richtung eingestellt sind, in der die Sonde (14) angeordnet werden darf, zu nehmen, wobei die Messeinheit (222) konfiguriert ist, um einen Abstand zwischen dem verwendeten Ursprung und der aktuellen Position der Sonde (14), die durch den Detektor (16) erfasst wird, zu messen;
eine Vielzahl von ersten Beleuchtungseinheiten (51), die eine Skala (510) begründen, die den Messbereich darstellt; und
eine Beleuchtungssteuereinheit (224), die konfiguriert ist, um zu bewirken, dass die erste Beleuchtungseinheit (51), die an einer Position angeordnet ist, die dem verwendeten Ursprung auf der Skalenleiste (510) entspricht, eingeschaltet wird.

7. Eindimensionale Messmaschine (1A) nach Anspruch 6, wobei
die Beleuchtungssteuereinheit (224) konfiguriert ist, um zu bewirken, dass die ersten Beleuchtungseinheiten (51) in unterschiedlichen Farben zwischen einem Fall, in dem der absolute Ursprung als der verwendete Ursprung ausgewählt wird, und einem Fall, in dem der relative Ursprung als der verwendete Ursprung ausgewählt wird, eingeschaltet werden.

8. Eindimensionale Messmaschine (1A) nach Anspruch 6 oder 7, wobei
der Bewegungsmechanismus (15) einen Schieber (13) und eine Führung (12) einschließt, wobei der Schieber (13) die Sonde (14) hält und die Führung (12) den Schieber (13) in der einen Richtung führt, und
die Vielzahl von ersten Beleuchtungseinheiten (51) entlang der einen Richtung zu der Führung (12) bereitgestellt ist.

9. Eindimensionale Messmaschine (1A) nach Anspruch 8, ferner umfassend
eine zweite Beleuchtungseinheit (52), die an dem Schieber (13) bereitgestellt ist, und
die Beleuchtungssteuereinheit (224) konfiguriert ist, um zu bewirken, dass die zweite Beleuchtungseinheit (52), in unterschiedlichen Farben zwischen einem Fall, in dem der absolute Ursprung als der verwendete Ursprung ausgewählt wird, und einem Fall, in dem der relative Ursprung als der verwendete Ursprung ausgewählt wird, eingeschaltet wird.

## Revendications

1. Machine de mesure unidimensionnelle (1) comprenant :
une sonde (14) configurée pour entrer en contact avec un objet à mesurer dans une direction ;
un mécanisme de déplacement (15) qui supporte la sonde (14) de manière mobile dans la première direction ;
un détecteur (16) configuré pour détecter une position actuelle de la sonde (14) dans la première direction ;
une unité de mesure (222) configurée pour prendre une origine sélectionnée en tant qu'origine utilisée parmi une pluralité d'origines comportant une origine absolue et une origine relative définies dans une plage de mesure dans la première direction dans laquelle la sonde (14) est autorisée à être disposée, l'unité de mesure étant configurée pour mesurer une distance entre l'origine utilisée et la position actuelle de la sonde (14) détectée par le détecteur (16) ;
une unité d'affichage (30) qui comporte un écran d'affichage (30A) ; et
une unité de commande d'affichage (223) configurée pour afficher une barre d'échelle (31) indiquant la plage de mesure sur l'écran d'affichage (30A), l'unité de commande d'affichage (223) étant configurée pour afficher un repère d'origine (32, 33) au niveau d'une position correspondant à l'origine utilisée sur la barre d'échelle (31);
dans lequel le repère d'origine (32, 33) est configuré pour permettre à un utilisateur d'identifier l'origine utilisée sur la barre d'échelle (31).

2. Machine de mesure unidimensionnelle (1) selon la revendication 1, dans laquelle
l'unité de commande d'affichage (223) est configurée pour afficher les repères d'origine (32, 33) de la pluralité d'origines comportant l'origine utilisée à laquelle des éléments d'informations d'identification des origines sont ajoutés au niveau des positions correspondant aux origines sur la barre d'échelle (31).

3. Machine de mesure unidimensionnelle (1) selon la revendication 1 ou 2, dans laquelle
l'unité de commande d'affichage (223) est configurée pour afficher un repère de sonde (34) au niveau d'une position correspondant à la position actuelle de la sonde (14) sur la barre d'échelle (31).

4. Machine de mesure unidimensionnelle (1) selon la revendication 3, dans laquelle
l'unité de commande d'affichage (223) est configurée pour commuter une couleur du repère de sonde (34) entre un cas où l'origine absolue est sélectionnée en tant qu'origine utilisée et un cas où l'origine relative est sélectionnée en tant qu'origine utilisée.

5. Machine de mesure unidimensionnelle (1) selon la revendication 4,
dans laquelle l'unité de commande d'affichage (223) est configurée de telle sorte que lorsque l'origine relative est sélectionnée en tant qu'origine utilisée, l'unité de commande d'affichage (223) ajoute un élément d'informations d'identification de l'origine relative au repère de sonde (34) et affiche le repère de sonde (34) avec l'élément d'information d'identification.

6. Machine de mesure unidimensionnelle (1A) comprenant :
une sonde (14) configurée pour entrer en contact avec un objet à mesurer dans une direction ;
un mécanisme de déplacement (15) qui supporte la sonde (14) de manière mobile dans la première direction ;
un détecteur (16) configuré pour détecter une position actuelle de la sonde (14) dans la première direction ;
une unité de mesure (222) configurée pour prendre une origine sélectionnée en tant qu'origine utilisée parmi une pluralité d'origines comportant une origine absolue et une origine relative définies dans une plage de mesure dans la première direction dans laquelle la sonde (14) est autorisée à être disposée, l'unité de mesure (222) étant configurée pour mesurer une distance entre l'origine utilisée et la position actuelle de la sonde (14) détectée par le détecteur (16) ;
une pluralité de premières unités d'éclairage (51) constituant une barre d'échelle (510) représentant la plage de mesure ; et
une unité de commande d'éclairage (224) configurée pour amener la première unité d'éclairage (51) disposée au niveau d'une position correspondant à l'origine utilisée sur la barre d'échelle (510) à s'allumer.

7. Machine de mesure unidimensionnelle (1A) selon la revendication 6, dans laquelle
l'unité de commande d'éclairage (224) est configurée pour amener les premières unités d'éclairage (51) à s'allumer dans différentes couleurs entre un cas où l'origine absolue est sélectionnée en tant qu'origine utilisée et un cas où l'origine relative est sélectionnée en tant qu'origine utilisée.

8. Machine de mesure unidimensionnelle (1A) selon la revendication 6 ou 7, dans laquelle
le mécanisme de déplacement (15) comporte un coulisseau (13) et un guide (12), le coulisseau (13) maintient la sonde (14), et le guide (12) guide le coulisseau (13) dans la première direction, et
la pluralité de premières unités d'éclairage (51) sont prévues le long de la première direction au guide (12).

9. Machine de mesure unidimensionnelle (1A) selon la revendication 8, comprenant en outre
une seconde unité d'éclairage (52) prévue sur le coulisseau (13), et
l'unité de commande d'éclairage (224) est configurée pour amener la seconde unité d'éclairage (52) à s'allumer dans différentes couleurs entre un cas où l'origine absolue est sélectionnée en tant qu'origine utilisée et un cas où l'origine relative est sélectionnée en tant qu'origine utilisée.
